# EUROPEAN PATENT APPLICATION

(11) **EP 3 674 591 A1**
(43) Date of publication of application: **01.07.2020**
(21) Application number: 19192846.4
(22) Date of filing: 21.08.2019
(51) Int. Cl.: F16L 41/12, F16L 47/30

(54) **WATER PIPE SPLITTING SADDLE**

(30) Priority: 28.08.2018 US 201862723545 P
(71) Applicant: PLAS-FIT LTD, 2015600 Bar Lev Industrial Park (IL)
(72) Inventor: FRIEDRICH, Jacob, 3602121 Tivovn (IL); TAVOR, Avraham, 2076027 Yokneam Ilit (IL)
(74) Representative: Harrison IP Limited

(57) **Abstract**

The present invention discloses a saddle clamping device for water pipe shunting, which comprises: a semicircular bottom portion; a semicircular top portion; a connecting device, wherein the connecting device is used for one end of the bottom portion pre-connected to one end of the top portion; a locking device for locking the free end of the bottom portion and the free end of the top portion; a circular aperture positioned at the top portion; and a female thread extending outwardly from the circular aperture. The saddle clamping device for water pipe shunting can be connected between a main water pipe and a diverting pipe to facilitate flow of water in the main pipe.

## Description

### Technical field

The present invention relates to a flow dividing device for water pipe shunting in an irrigation system or drinking water system or in fire extinguishing systems, and in particular to a saddle clamping device for water pipe shunting, the clamping device being installed around a water pipe for water from a main water pipe leaded out.

### Background

When designing an irrigation structure for a field or water supply system or in fire extinguishing systems, along the entire field, there is a main water pipe leading from the main water supply point, and it is necessary to split a plurality of side pipes from the main water pipe for irrigating the entire field. There is, therefore, a need for a connecting component that connects the splitter conduit to the main water conduit.

### Summary of the Invention

In order to solve the above technical problem, the present invention provides a saddle clamping device for water pipe shunting, which connects between the main water pipe and the diverting pipe to facilitate the splitting of water from the main water pipe.

In one particular embodiment, the saddle clamping device for water pipe shunting, comprises:
semicircular bottom portion;
semicircular top portion comprising a female thread extending outwardly;
a connecting device for pre-connecting one end of the bottom portion with one end of the top portion;
a locking device for locking the free end of the bottom portion and the free end of the top portion;
a sealing means positioned on the top portion; and

In one embodiment, the connecting device includes a shaft and a through hole. The through hole is formed on both top and bottom portions in such way that a continuous hole is formed when assembling them together. The shaft being disposed at a pre-joining end of a top portion/bottom portion of the saddle clamping device, passes the through hole being provided at a pre-joining end of the bottom portion/top portion. The bottom portion and the top portion are coupled together by a shaft passing through the hole to enable the saddle clamping device to affect a transition between an open state and a closed state.

In one embodiment, the bottom portion, the top portion, and the connecting device are integrally formed as monolithic part. In this embodiment the material formed between the top and bottom portions acts as a hinge, allowing relative movement between the parts, and allows rotating them to form a closed cylindrical space around the pipe.

In one embodiment, the bottom portion or the top portion has an inwardly projecting hook, and the opposite portion is provided with a hole matching the hook at a corresponding position, when the saddle portions is rotated and the hooks are positioned within the aperture when the top portion is closed around the conduit.

Further, the free end of the bottom portion is provided with a positioning hole, and the free end of the top portion is provided with a semi-opening groove/fixing hole. The locking device comprises a bolt and a nut, and the bolt is located in the positioning hole and the semi-opening groove/fixing hole that cooperates with the nut. The bolt, the nut, the positioning hole and the semi-opening groove/fixing hole are arranged to tighten the top portion and the bottom portion together, the bolt is freely movable within an angular range between the vertical position and the inclined position.

In one particular embodiment, the bolt and the nut are inclined between two or more predetermined positions. In yet another particular embodiment, there are two bolts at the bottom portion of the free end, matching two corresponding semi-opening/fixing holes at the top portion of the free end.

The present invention also provides a locking device comprising pre-installed bolts and nuts that are freely movable within an angular range between a vertical position and a tilted position in a saddle clamping device. In one particular embodiment, the pre-installed bolts and nuts are angled between two or more predetermined positions.

In yet another embodiment, the saddle clamping device for water pipe shunting further comprises a sealing member and a fixing member. The fixing member is provided with buckles/snaps that protrude upwards at the outskirts area of the inner surface of the top portion and match grooves at the inner surface. The inner surface of the top portion comprises a recess for introducing the sealing member, where the grooves for the buckles/snaps surround the recess of the sealing member in close proximity. Once the sealing member is inserted into the recess, the fixing member is placed on it and locks it in the recess by pressing and introducing the buckles/snaps into their matching grooves, thus creating firm grip of the sealing member in place without protruding out of the sealing area. This enables fixing the sealing member in place without falling off of the top portion, when closing the top portion over the bottom portion.

In another embodiment, the present invention also provides fixing means for fixing a drilling device, wherein the fixing means is located at a top portion of the saddle clamping device for aligning and mechanically securing a drilling device to the top surface of the top portion. The fixing means allows a drilling device to be securely connected above the female threaded extension, for drilling the main water pipe. In one embodiment, the drilling device securing means is a plurality of pins, extending out of the top portion and located around the female thread on the top portion.

In another aspect, the present invention provides a saddle clamping device, wherein a top portion of the saddle clamping device is provided with a female thread, and a lower end of the female thread is provided with a tapered inclined surface for improving the introduction into the threaded hole, and the sealing of the male thread equipment.

### Brief Description of the Drawings

In order to more clearly illustrate the embodiments of the present invention or the technical solutions in the prior art, the drawings to be used in the embodiments or the description of the prior art will be briefly described below. Obviously, the drawings in the following description represent only some embodiments of the present invention, and those skilled in the art can obtain other drawings according to these drawings without any creative work.
**Fig. 1A** is a schematic structural view of a preferred embodiment of a conventional saddle clamping device in a fully closed position;
**Fig. 1B** is a schematic view showing the structure of another preferred embodiment of the conventional saddle clamping device in a fully closed position;
**Fig. 1C** is a schematic structural view of still another preferred embodiment of the prior saddle clamping device in a fully closed position;
**Fig. 2A** is a front view of the prior saddle clamping device in a fully closed position;
**Fig. 2B** is a side view of the prior saddle clamping device in a fully closed position;
**Fig. 3** is an exploded perspective view of a conventional saddle clamping device;
**Fig. 4** is a view showing the state of use of the saddle clamping device, mounted on a water pipe;
**Fig. 5A** is a view showing a state during a conventional saddle clamping device is mounted on a water pipe;
**Fig. 5B** is a state diagram of a conventional saddle clamping device during drilling of a water pipe;
**Fig. 6A** is a schematic view showing the inner structure of a preferred design of the saddle clamping device in an open state according to the present invention;
**Fig. 6B** is a schematic view showing the outer structure of a preferred design of the saddle clamping device in an open state according to the present invention;
**Fig. 6C** is a schematic structural view of the saddle clamping device of **Fig. 6B** in a fully closed state;
**Fig. 6D** is a schematic structural view of the saddle clamping device with a double-element locking device;
**Fig. 7A** is a schematic structural view of a preferred embodiment of the saddle clamping device of the present invention in an open state;
**Fig. 7B** is a schematic structural view of another preferred embodiment of the saddle clamping device of the present invention in an open state;
**Fig. 8A** is a schematic structural view of the saddle clamping device of **Fig. 7A** in a partially closed state;
**Figure 8B** is a schematic view showing the structure of the saddle clamping device with the pins at the upper portion for locating a drilling device;
**Fig. 8C** is a schematic view showing the structure in which the bolt and the corresponding nut are locked in a vertical position in the fully closed state of the saddle clamping device of **Fig. 7A**;
**Fig. 9A** is a schematic structural view of a preferred embodiment of the saddle clamping device in **Fig. 7A** of the present invention in a pre-installed state in which the bolt and the nut are still in an inclined position;
**Fig. 9B** is a schematic structural view of a preferred embodiment of the saddle clamping device in **Fig. 7A** of the present invention in a pre-installed state in which the bolt and the nut are in a vertical position;
**Fig. 10** is a schematic view showing the structure of the saddle clamping device in **Fig. 7B** fixed by two kinds of connecting devices on the pre-connected end of the saddle clamping device;
**Fig. 11A** is a schematic structural view of a top portion of a saddle clamping device having a sealing member and fixing member according to the present invention;
**Fig. 11B** is a schematic exploded view of **Fig. 11A**;
**Fig. 11C** is a cross-section view of the top portion if the saddle clamping device which is illustrated in **Fig. 11A**.
**Fig. 12** is a structural schematic view of the top portion of the saddle clamping device of the present invention having a tapered bevel at the bottom side of the female thread.

### Detailed Description of the Drawings

The present invention will be described in detail below in conjunction with specific embodiments. The following examples will be further understood by those skilled in the art, but are not intended to limit the invention in any way. It should be noted that a number of variations and modifications can be made by those skilled in the art without departing from the spirit of the invention. These are all within the scope of protection of the present invention.

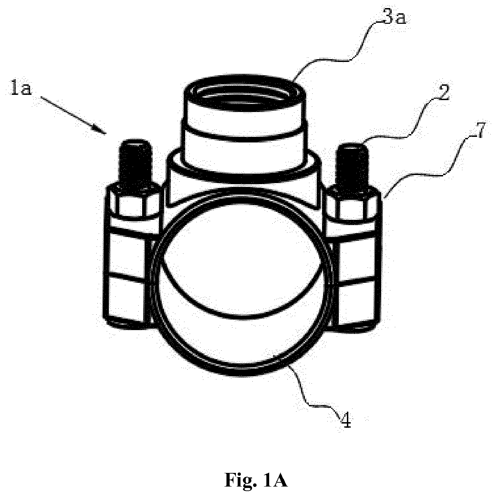

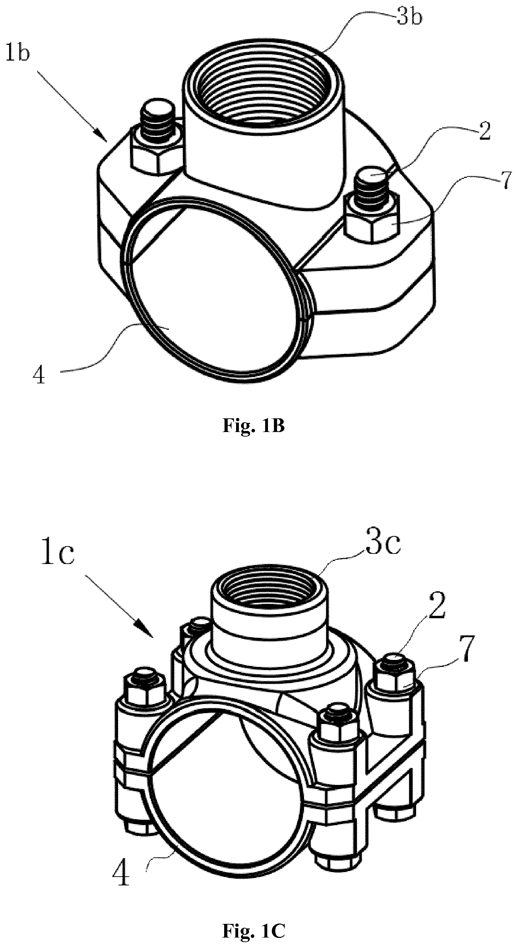

**Figs. 1A-1C** show a schematic, structural view of a preferred embodiment of a conventional saddle clamping device **1a-1c** in a fully closed position (a conduit is not shown). In its fully closed position, the top and bottom portions of the saddle clamping device are mechanically coupled by bolts **2** and nuts **7** to form a cylindrical space **4** for clamping around the water tube. The top portion of the saddle clamping device **1a-1c** is designed with a hollow cylindrical hole **3a-3c** having a female thread. The hollow cylindrical hole **3a-3c** having a female thread is positioned during assembly over a hole in the primary water main pipe and then a stage splitter pipe is connected to the hole.

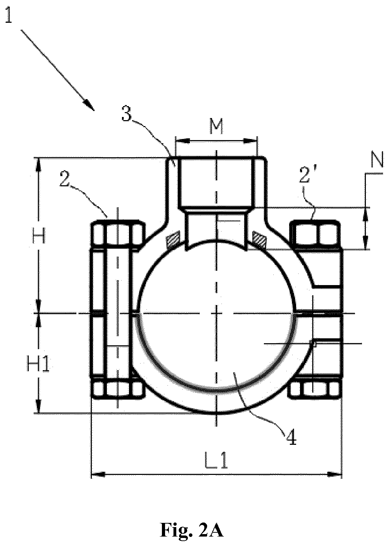

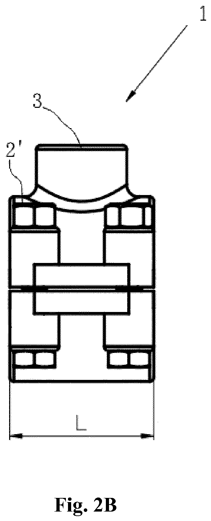

**Figs. 2A** to **2B** show a front view and a side view of a conventional saddle clamping device **1** in its fully closed position. The schematic shows the geometrical diameters of the top and bottom sides of the saddle clamping device along the vertical and parallel directions of the main water pipe, the saddle clamping device comprising a female threaded portion **3** at the top. In this case, the schematic corresponds to a conventional saddle clamping device, which is made of two separate parts and secured by two bolts **2**, **2'** on each side of the saddle.

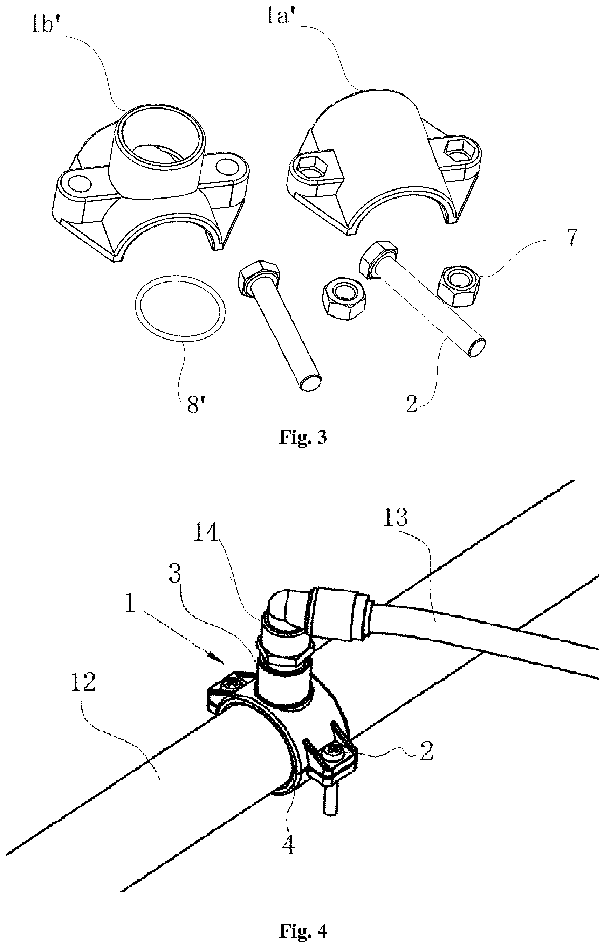

**Fig. 3** is a schematic exploded view of a conventional saddle clamping device including a saddle top portion **1b'** and a bottom portion **1a'** clamped around the pipe to be shunt for sealing the holes in the main water pipe member. O-ring **8'** is used for sealing the area around the drilled hole in the main water pipe, for preventing leakage of water. Bolt **2** and nut **7**, are used to close and secure the saddle clamping device around the water pipe to be diverted.

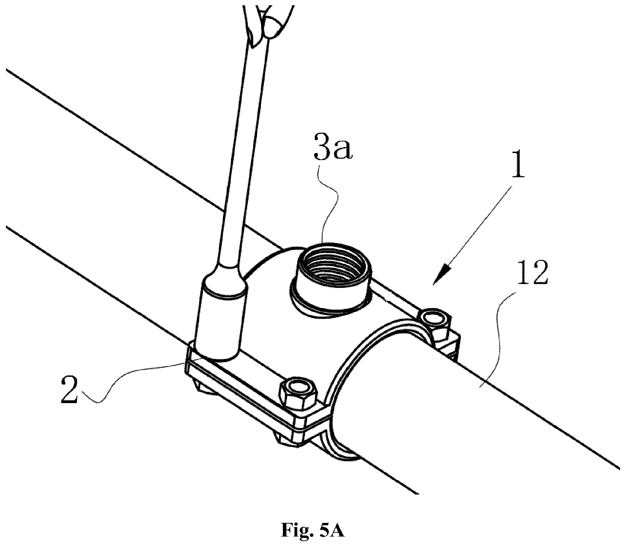

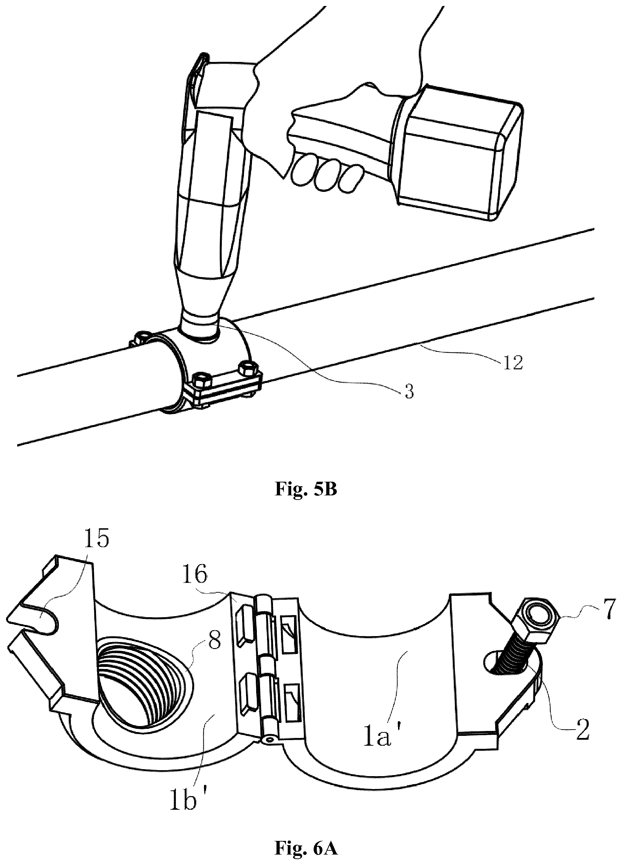

As shown in **Fig. 4**, all the components of the saddle clamping device **1** installed around the primary water main pipe **12** and the secondary two-way water pipe **13** to be branched are shown. The secondary water distribution pipe is connected to the corresponding female screw portion **3** through the corresponding adapter **14**. **Fig. 5A** shows a typical installation procedure of conventional saddle clamping device, during which the bolts **2** should be screwed one after the other in order to secure the saddle clamping device parts **1** around the water pipe **12**. **Fig. 5B** show a state diagram of an assembly of a water pipe **12** having a conventional saddle clamping device **1** during drilling, with a manual electric drill device at the top side of the primary water pipe **12** to be split. The inside of the hollow cylindrical hole **3a** (shown in **Fig. 5A**) having a female thread is bored.

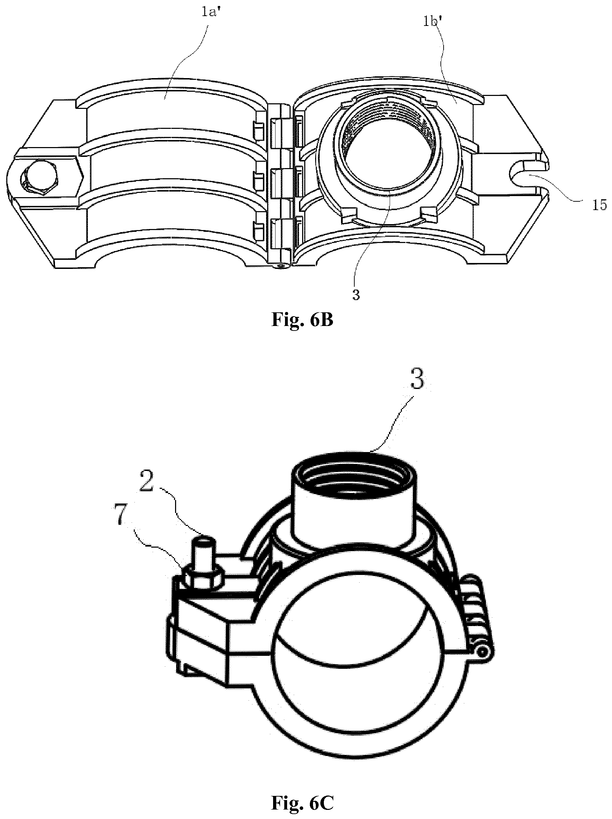

**Fig. 6A** to **Fig. 6C** are schematic views showing the inner and outer structures of one of the preferred designs of the saddle clamping device in the fully open state and the fully closed state of the present invention.. As shown in **Figures 6A-6B**, in several designs, the top and bottom portions are joined at the pre-joined end **16** by a hinge, this side being labelled as a pre-joined side. On the opposite distal side, the free end, the bottom portion and the top portion comprise various mechanical locking means. A locating hole is formed at the free end of the bottom portion. The bolt **2** is embedded in the locating hole and a nut **7** is matched with the thread. The top portion includes matching semi-opening slot/fixing hole **15**. The figure shows the bolt tilting structure, including the bolt **2** in an inclined position in the open state of the saddle clamping device. As shown in **Fig. 6C**, when the saddle clamping device is in the closed state, the bolt **2** is switched from the tilt to the vertical position inside the half opening slot/fixing hole **15.** As shown in **Fig. 6C**, the top and bottom portions can be brought to a fully closed state around the water tube (not shown) along the axis provided by the hinge.

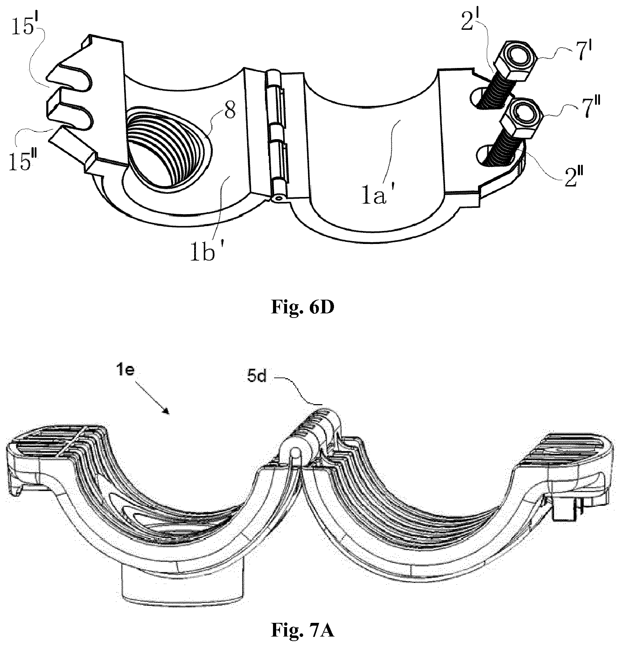

**Fig. 6D** shows another configuration, in which the locking device comprises two bolts **2'** and **2"** and corresponding nuts **7'** and **7"** are positioned in two adjacent locating holes at the free end of the bottom portion of the saddle clamping device.

Corresponding locating/fixing semi-open slots **15'** and **15"** are located parallel to the bolts **2'** and **2"** at the free end of the top portion of the saddle clamping device. Such configuration further tightens the hold of saddle to the pipe and improves securing it in place.

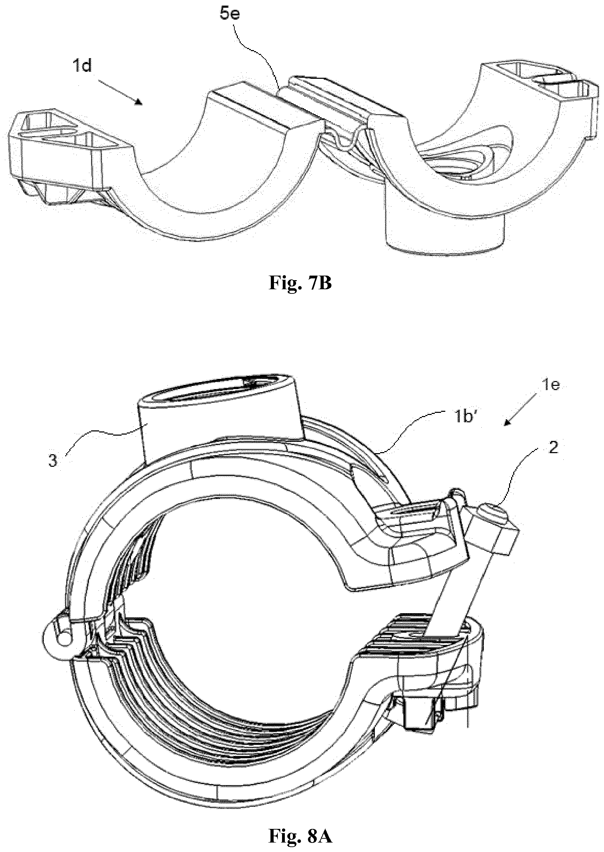

**Fig. 7A** and **Fig. 7B** are schematic views showing the structure of the two alternative designs **1d-1e** of the saddle clamping device in an open state. On the pre-connected side, the top and bottom of the saddle clamping device are connected by a shaft **5d** which passes thru a both top and bottom portions holding them together as shown in **Fig. 7A** or by an integrally injected joint/axis **5e** as shown in **Fig. 7B**. In these designs, the saddle clamping device can be fabricated from a sturdy synthetic material similar to the design shown in **Fig. 7B**. Alternatively, the saddle clamping device can also be constructed from two separate pieces that are held together by a metal hinge or plastic hinge going through a shaft hole as shown in **Fig. 7A**.

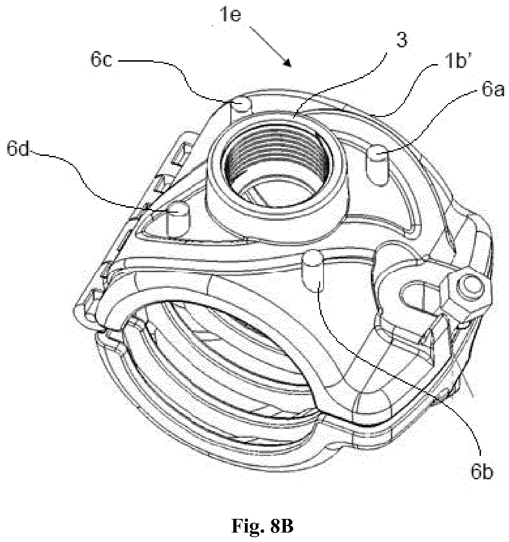

**Fig. 8A** to **Fig. 8C** show the installation process of the saddle clamping device **1e** around the primary water main pipe (not shown). The configuration includes at least one bolt **2** structure that tilts the fixing bolts and at least one fixing nut **7** to mount the clamping device around the main water pipe. **Fig. 8A** shows the saddle clamping device **1e** in a partially closed state during installation, with the bolt **2** in an unlocked, tilted position and pushed away from the top portion of the saddle so that the top portion can be closed over the water pipe. **Fig. 8B** shows the saddle clamping device in a fully closed state during installation, while the bolt **2** is still in its tilted, unlocked position. This figure shows how the bolts are tilted over a wide range of angles, allowing the user to easily close the saddle clamping device on the pipe, then placing the bolts in an upright position and tightening the nuts.

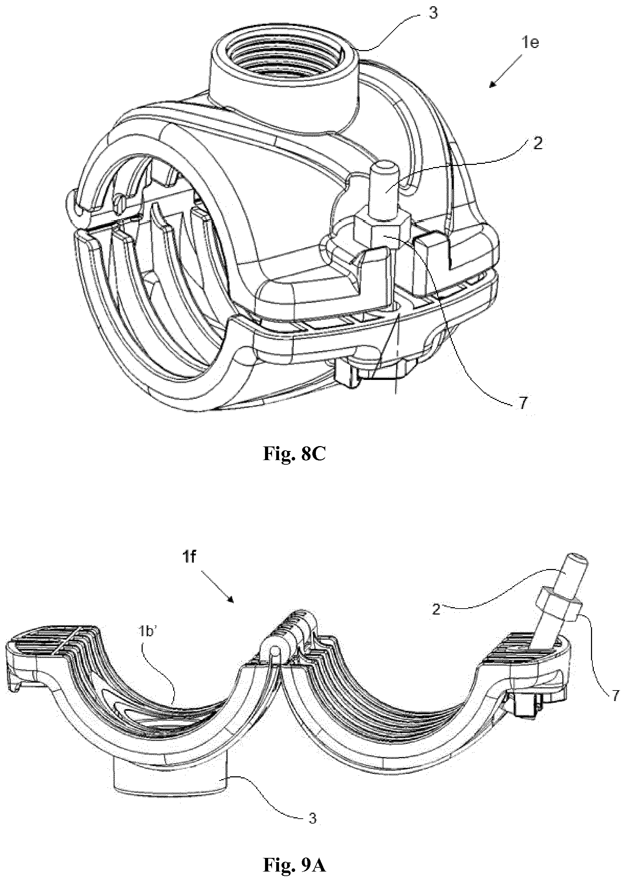

**Fig. 8B** also shows that the top portion of the saddle clamping device further includes additional four pin members **6a-6d** positioned along the periphery of the female threaded portion **3** at the top portion **1b**. These four pins are used to align and mechanically mount the drilling device within the female threaded portion **3** to form a hole in the top of the main water pipe for connecting the split water pipe. **Fig. 8C** shows the saddle clamping device in a fully closed state with the bolt locked in a vertical position with the corresponding nut.

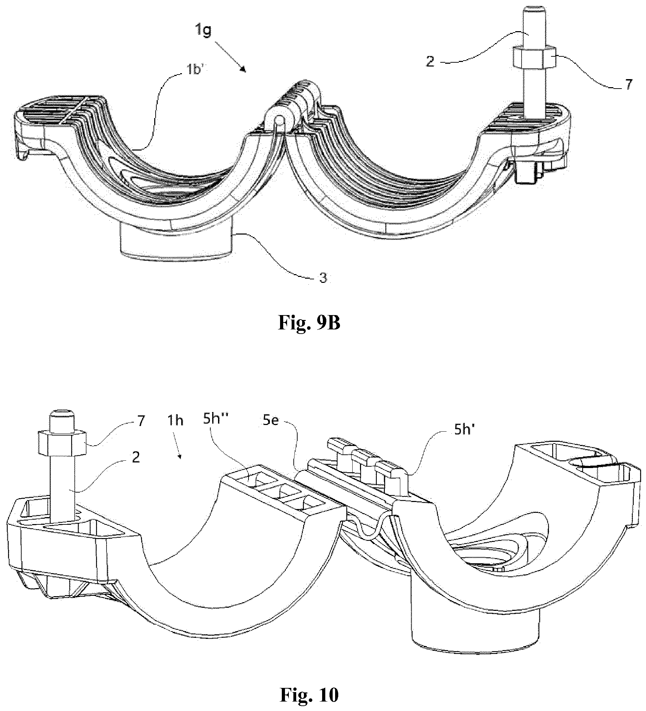

**Figs. 9A** through **9B** show two configurations of a saddle clamping device having a bolt in a pre-installed state. The bolts **2** and nuts **7** are in an inclined position (**Fig. 9A**) and a vertical position (**Fig. 9B**), respectively. These two configurations illustrate a mechanical device for securing the various portions of the saddle clamping device together. On the other hand, the figures show the advantages offered by the tilt bolts in terms of freedom and locking. The two extreme positions of the nut and bolt shown in **Fig. 9A** and **Fig. 9B** can be either discrete and pre-determined or such that the bolt is free to move in a plurality of angles within a defined range.

**Fig. 10** shows a particular embodiment of a saddle clamping device **1h** secured by two mechanical means on either side of the saddle, having a bolt **2** and a hook and hole system **5h'** and **5h"** correspondingly. The top and bottom of the saddle clamping device are connected by a flexible intermediate shaft **5e**. During installation, the hook **5h'** at the connecting end of the top portion of the saddle **1h** protrudes outwardly and locks inside the corresponding hole **5h"** at the connecting end of the bottom portion of the saddle. This way of locking the hook in the hole is assembled an additional mechanical holding forces can then be generated.

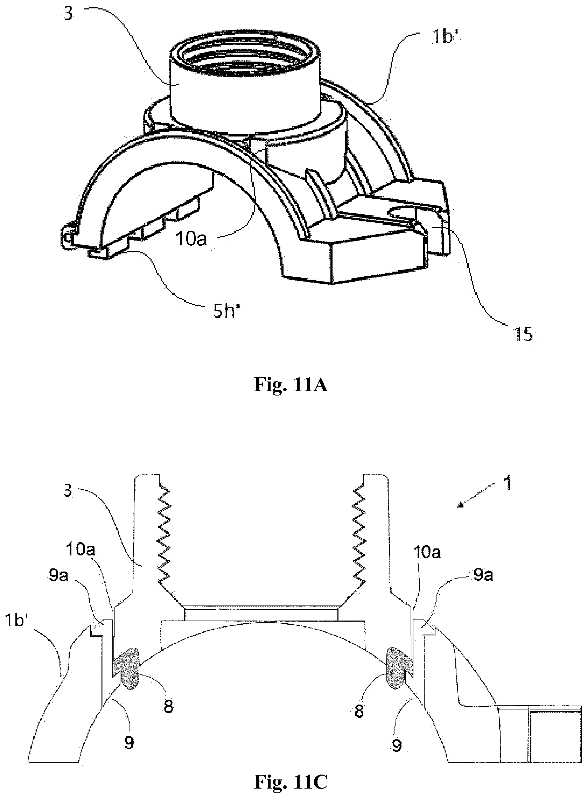

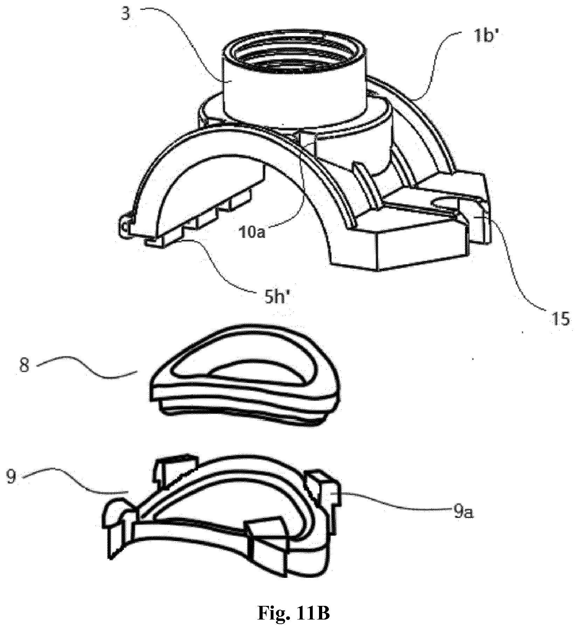

**Figs. 11A-11B** illustrate a top portion of a saddle clamping device having a seal **8** and a seal securing and fixing member **9**. The seal fixing member **9** holds the seal **8** in place so as not to affect the tightness of the seal area. The seal **8** is placed in a recess at the inner surface of the top portion, where the recess encircles the circumference of the entry of the female thread into the top portion **1b'**. To prevent displacement of the seal **8** off of the recess when closing the top portion over the bottom portion, the fixing member **9** is placed on top of it and locked to the inner surface of the top portion with buckles **9a** for preventing the seal from coming off of the body of the saddle during handling or when assembled on the pipe. The buckles are introduced into and locked in corresponding, matching grooves that surround the recess that houses the seal **8**. The outer walls of these grooves are illustrated as **10a** in **Fig. 11B**.

**Fig. 11C** illustrates cross-section of top portion **1b'** and shows the relative locations of the seal **8** in its recess, the fixing member **9** on top of it and the buckles **9a** that extend from the fixing member and locked in their corresponding grooves **10a** at the outer surface of the top portion. The fixing member **9** with buckles **9a** locks the seal between the fixing member **9** and the inner surface of the top portion. This ensures the seal **8** will properly seal an opening, which is drilled into a pipe on which the saddle clamping device is mounted, through the entry of the female thread. The seal **8** is preferably made of elastic material with sufficient thickness to form proper seal for the water that flows out of the main pipe through the female thread. The fixing member **9** and its buckles **9a** are preferably made of a rigid material to tighten the seal **8** inside the recess and cause a firm grip of buckles **9a** in their grooves.

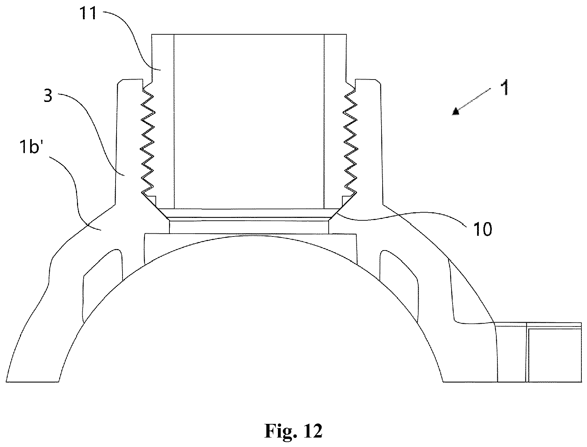

**Fig. 12** shows the saddle clamping device **1** having a bore and a female threaded portion **3** with a tapered bevel **10** on the underside (end) of the female threaded portion **3**. The tapered bevel **10** creates a tight seal between the body of the saddle clamping device **1** and a male threaded member **11** screwed into the female threaded portion **3** so that the material can be wrapped or sealed with little or no additional seal to improve the impervious seal.

The purpose of this product is to allow water to be separated from the primary water main pipe to the secondary side piping, when designing irrigation structures for fields.

## Claims

1. A saddle clamping device for water pipe shunting, comprising:
semicircular bottom portion;
semicircular top portion comprising a female thread extending outwardly;
a connecting device for pre-connecting one end of the bottom portion with one end of the top portion;
a locking device for locking free end of the bottom portion to free end of the top portion; and
sealing means positioned at inner surface of the top portion.

2. The saddle clamping device for water pipe shunting according to claim 1, wherein the connecting device comprises: a through hole at a pre-joined end of the bottom portion, a through hole at a pre-joined end of the top portion, and a rigid shaft, the shaft is configured to pass through the through holes of the top portion and bottom portion and join them together, thus implementing a transition between an open state and a closed state of the saddle clamping device.

3. The saddle clamping device for water pipe shunting according to claim 1, wherein the locking device comprises one or more bolts and nuts in one or more corresponding locating cavities at the free end of the top or bottom portions and corresponding one or more semi-open fixing slots at the free end of the bottom or top portions, wherein the bolts are configured to lock within the fixing slots, wherein the locking device is configured to lock top portion to the bottom portion by locking the bolt(s) within the fixing slot(s) upon closing the saddle closing device.

4. The saddle clamping device for water pipe shunting according to claim 3, wherein the locating cavities are larger than the diameter of the bolts, enabling angular movement of the bolts when held in the cavities, wherein the bolts separate between the top portion and the bottom portion when positioned in angular position relative to the top and bottom portions and locking the top portion to the bottom portion when introduced into the fixing slots in vertical position and tightening the nut on the bolt to edge of the fixing slots at the top portion.

5. The saddle clamping device for water pipe shunting according to claim 4, wherein the bolt and nut are inclined between two or more predetermined positions.

6. The saddle clamping device for water pipe shunting according to claim 1, wherein the bottom portion, the top portion and the connecting device are integrally formed as one piece.

7. The saddle clamping device for water pipe shunting according to claim 1, wherein the connecting means is a flexible intermediate shaft.

8. The saddle clamping device for water pipe shunting according to claim 1, wherein the connecting device comprises an integrally formed shaft in one of the top or bottom portions and an integrally formed hook in the opposite portion, wherein the integrally formed shaft and hook create a hinge upon connecting them together, thus allowing rotary movement of the top and bottom portions and enabling to close them over the pipe to be shunted.

9. The saddle clamping device for water pipe shunting according to claim 1, wherein the pre-joined end of one of the top or bottom portions connecting device comprises a hook protruding inwards, a pre-joined end at the opposite portion that comprises a hole in a corresponding position that matches the hook, wherein the hook is positioned within the hole when the bottom portion and the top portion are rotated to close around the pipe.

10. The saddle clamping device for water pipe shunting according to claim 1, wherein the top portion further comprises means for aligning and mechanically securing a drilling apparatus to a main water pipe.

11. The saddle clamping device for water pipe shunting according to claim 10, wherein said means is one or more pins extending from an inner side to an outer side of the top portion and disposed about the female thread.

12. The saddle clamping device for water pipe shunting according to claim 1, wherein the sealing means comprises:
a sealing member and a fixing member, wherein sealing member matches a recess encircling a circumference of the inner thread at the inner surface of the top portion;
a fixing member configured to match the sealing member; and
buckles on the fixing member, wherein the buckles are configured to be introduced into and lock in matching grooves at the inner surface of the top portion around the recess.

13. A saddle clamping device for water pipe shunting, comprising:
a semicircular bottom portion;
a semicircular top portion comprising a female thread extending outwardly;
one or more locking devices for locking the bottom portion to the top portion; and
sealing means for sealing between the top portion and the water pipe;
a sealing and fixing device,
wherein the sealing means comprises a sealing ring configured to be introduced into a recess encircling a circumference of a and fixing device comprises a sealing member, a fixing member and buckles on the fixing member, wherein the buckles are configured to lock the sealing member in s recess that encircles a circumference of at an inner surface of the top portion between the top portion and the fixing member.

14. The saddle clamping device for water pipe shunting according to claim 1, wherein lower end of the female thread is provided as a tapered bevel.

15. A saddle clamping device for water pipe shunting, comprising:
a semicircular bottom portion; and
a semicircular top portion comprising a female thread extending outwardly;
one or more locking devices for locking the bottom portion and the top portion; and
sealing means for sealing between the top portion and the applied water pipe; and
a drilling apparatus securing device located at the top portion for aligning and mechanically securing a drilling apparatus to a main water pipe,
wherein the drilling apparatus securing device is a formed as pins extending from the outer side of the top portion.
